# EUROPEAN PATENT SPECIFICATION

(11) **EP 0 306 235 B1**
(45) Date of publication and mention of the grant of the patent: **21.04.1993**
(21) Application number: 88307941.0
(22) Date of filing: 26.08.1988
(51) Int. Cl.: G05D 23/13, F24H 9/20

(54) **Control apparatus for water temperature and water flow rate**
Regeleinrichtung für die Temperatur und den Durchfluss von Wasser
Dispositif de régulation pour la température et le débit de l'eau

(30) Priority: 31.08.1987 JP 132659/87 U
(43) Date of publication of application: 08.03.1989
(73) Proprietor: INAX CORPORATION, Tokoname-Shi Aichi (JP)
(72) Inventor: Sakakibara, Shigeru c/o Enokido Factory, Tokoname-Shi Aichi (JP)
(74) Representative: Jenkins, Peter David

(56) References cited:
- EP-A- 0 187 484
- EP-A- 0 195 271
- DE-C- 3 343 664
- FR-A- 2 562 687
- GB-A- 2 169 733
- US-A- 4 420 811

## Description

The present invention concerns an apparatus for controlling the temperature and the flow rate of water e.g. to be supplied to showers, kitchens, washstands, bath tubs, etc. More specifically, it relates to a control apparatus for water temperature and water flow rate having an improved system for controlling the water temperature and the water flow rate upon starting the discharge of water again after the temporal stopping.

As control means for the water temperature and the water flow rate for example, of a shower a manual mixing valve has hitherto been used. However control apparatus in which all of adjustment for the water temperature and the water flow rate are conducted by switch operation has been used in recent years.

In the apparatus of this type, standard values for the water temperature and the water flow rate are stored and, upon pushing a water discharge switch, discharge of water is started at the water temperature and the water flow rate in accordance with the standard values. Further, control switches for the water temperature and the water flow rate are disposed to the control apparatus, so that the water temperature or the water flow rate can be controlled by operating the control switch.

In the conventional control apparatus for the water temperature and the water flow rate, even if the control switches have been set so that the water temperature and the water flow rate are most comfortable, for example, to a user of the shower user, the memory for the water temperature and the water flow rate once set is lost after the water has been stopped, and water is discharged when the water is discharged again for the water temperature and the water flow rate in accordance with the standard values. Accordingly, the water temperature and the water flow rate have to be set again.

It may be considered to store selected water temperature and water flow rate and discharge water always at the selected water temperature and the water flow rate in the case of starting the water discharge again. In this case, however, since the water is discharged upon starting the discharge of water under the conditions previously selected by a user who used the apparatus before, it may be a risk that water is discharged at an unexpectedly hot or cold temperature or at an unexpectedly great flow rate to make the feeling of use not comfortable.

EP-A-0195271 discloses a water supply installation for selectively controlling the supply of water to respective discharge outlets of a plurality of ablutionary appliances consisting of a bath, shower, bidet and separate wash basins. The installation includes a control unit housing a mixing valve having separate cold and hot water supplies and an outlet connection to a common manifold having a plurality of outlets each connnected to a respective single appliance supply pipe for delivery of mixed water to the associated discharge outlet. The apparatus is operated from a control panel which allows the user to select an appliance and operate control valve means permitting flow of mixed water from the manifold to the associated discharge outlet through the single supply pipe. This suffers from the disadvantage discussed above in that only user-selected values are retained.

The control apparatus for water temperature and water flow rate according to the present invention comprises: control apparatus for controlling water temperature and water flow rate comprising: a mixing valve adapted to be supplied with hot and cold water from a hot water source and cold water source respectively and deliver mixed water, a flow rate control means for controlling the flow-rate of the mixed water from said mixing valve to a place where it is required, and a controller for operating said mixing valve and said flow rate control means , wherein said controller comprises; discharge control means for starting and stopping the discharge of mixed water, control means for controlling the water flow rate and the water temperature of the mixed water, a first memory means for storing selected values representing the water temperature and the water flow rate set by a user, a timer for measuring time elapsed from stopping of a water discharge, and characterised in that the control apparatus comprises a second memory means for storing standard values representing a standard water temperature and a standard water flow rate of the mixed water, and a signal selection means coupled to the timer and to each of the first and second memory means and operable to output to the control means either a selected value control signal, based on selected values, when a supply of water is requested before the elapse of a pre-determined period of time after the last water discharge operation has ceased or a standard value control signal, based on standard values, when a supply of water is requested after the elapse of a predetermined period of time after the last water discharge operation has ceased.

The invention also provides a method of operating a control apparatus to control water temperature and water flow rate the apparatus comprising: a mixing valve adapted to be supplied with hot and cold water from a hot water source and cold water source respectively and deliver mixed water, a flow rate control means for controlling the flow-rate of the mixed water from said mixing valve to a place where it is required, and a controller for operating said mixing valve and said flow rate control means , wherein said controller comprises; discharge control means for starting and stopping the discharge of mixed water, and control means for controlling the water flow rate and the water temperature of the mixed water, the method comprising: measuring time elapsed from stopping of a water discharge to determine whether said elapsed time is less or greater than a predetermined time; and outputting to the control means either a selected value control signal, based on selected values , when a supply of water is requested before the elapse of said predetermined period of time after the last water discharge operation has ceased or a standard value control signal, based on standard values , when a supply of water is requested after the elapse of said predetermined period of time after the last water discharge operation has ceased, wherein said selected values represent the water temperature and water flow rate set by a user and said standard values represent a standard prestored water temperature and a standard prestored water flow rate.

The standard water temperature may be set to such a temperature that most of people feel comfortable when they touch hot water upon taking shower, etc. The standard water flow rate may be set to such a flow rate as most frequently used in the usual state of use.

In the present invention, the controller may be constituted by using a microcomputer. A control program may by written into the ROM (read only memory) and those data such as for the water temperature and the water flow rate can be stored in the RAM (random access memory) of the microcomputer. In the present invention, as the hot water source, those tanks storing hot water heated by an electrical heater, gas burner, petroleum burner, solar heat heater, etc. can be used. As a cold water source, those tanks storing water supplied from water supply or wells can be used. The apparatus according to the present invention is preferably used for supplying hot water to those places requiring hot water such as shower, kitchen, washstand, bath tub, etc.

In the control apparatus for water temperature and water flow rate according to the present invention, in a case where water discharge of water is started again within a predetermined of time after the water stopping operation, water is discharged again at the water temperature and the water flow rate just before the stop of water. Accordingly, in a case when a user of a shower, etc. starts the water discharge again directly after the temporal water stopping, discharge of water is started again at a set water temperature and water flow rate.

Further, in a case if a predetermined of time has been elapsed after the stop of water, water is discharged again at the standard water temperature and the standard water flow rate upon conducting water discharging operation. Accordingly, in a case if a person uses a shower and then another person uses the shower after the elapse of a predetermined of time, water is discharged again at the standard water temperature and the standard water flow rate.

According to the control apparatus for water temperature and water flow rate according to the present invention, water is discharged again at the same water temperature and the water flow rate as those upon stopping water discharge in a case where a short time has been elapsed from the stop of water discharge to the re-start of the water discharge. On the contrary, if a long time has been elapsed from the stop of water discharge to the re-start of water discharge, water is discharged again at the standard water temperature and the standard water flow rate. Accordingly, after the water temperature and the water flow rate have been set to a most preferred conditions to a certain user during taking shower and then the water has been stopped temporarily, water can be discharged again at this most preferred water temperature and the water flow rate upon starting the water discharge again.

On the other hand, in a case where a long period of time has been elapsed from the stop of water to the restart of water discharge as in the case where a user discharges the shower water after the use of the shower by another user, since the water discharge is started at the standard water temperature and the standard water flow rate, undesirable state that unexpectedly hot or cold water is discharged, or unexpectedly great amount of water is discharged can surely be prevented.

In the control apparatus according to the present invention, there is no requirement for disposing a conventional temporal water stop switch, etc. and the operationability is extremely improved.

An embodiment of the present invention will now be described by way of example only with reference to the accompanying drawings, in which:
Figure 1 is a systematic diagram illustrating the apparatus as one embodiment according to the present invention; and
Figures 2, 3 and 4 are flow charts for explaining the control program

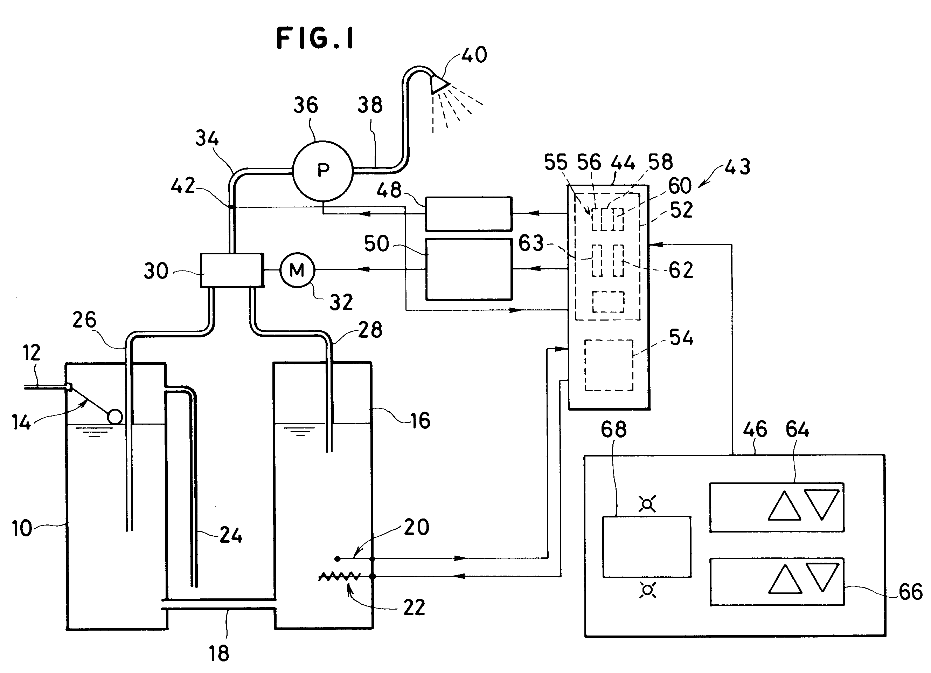

Figure 1 is a systematic view illustrating one embodiment of the apparatus according to the present invention. Reference numeral 10 denotes a water tank which is connected with a tap water pipe 12 and adapted such that tap water can be supplied to a predetermined level by a ball tap 14. Reference numeral 16 denotes a hot water tank, which is in communication with the bottom of the water tank 10 by way of a pipe 18 and adapted such that the water level therein is the same as that in the water tank 10. The hot water tank 16 is provided with a temperature control sensor 20 and a water boiling heater 22. Further, the water tank 10 is connected with an overflow pipe 24.

The water tank 10 and the hot water tank 16 are connected with a mixing valve 30 by way of a water supply pipe 26 and a hot water supply pipe 28, and a driving motor 32 is attached to the mixing valve 30 for changing the mixing ratio between cold water and hot water.

At the exit of the mixing valve 30, a variable discharge flow rate pump 3 is connected by way of a pipe 34 and the discharge side of the pump 36 is connected by way of a pipe 38 to a shower head 40. A temperature sensor 42 for detecting the temperature of the mixed water is disposed to the pipe 34.

Reference numeral 43 denotes a controller for controlling the temperature and the flow rate of water and it comprises a controller main body 44, a switch panel 46, a voltage control circuit 48 and a motor driver circuit 50. The controller main body 44 has a control section 52 for water temperature and water flow rate and a control section 54 for the heater 22 in the hot water tank 16. The control section 52 for the water temperature and the water flow rate has a microcomputer 55, which comprises a ROM (read only memory) 56 for storing a control program, a RAM (random access memory) for temporarily storing the data, a CPU 60 for executing the processing and mathematical operation, as well as data bus, etc. for connecting them. Further, the water temperature and water flow rate control section 52 has an input device 62 and an output device 63. The input device 62 is inputted with signals from a water temperature switch (water temperature setter) 64, a water flow rate switch (water flow rate setter) 66 and a discharge water stop switch (ON/OFF switch) 68 on the switch panel 46, as well as the signal from the temperature sensor 42. The output device 63 delivers control signals to the voltage control circuit 48 and the motor driver circuit 50.

The water temperature switch 64 outputs one shot of pulses on every pushing for the left side thereof for elevating the water setting temperature, for example, by 1°C, by which the aimed water temperature Ts for the control is elevated by 1°C. Furthermore, the switch issues one shot of pulse on every pushing for the right side thereof, by which the aimed water temperature Ts for the control aim is lowered, for example, by 1°C, depending on the one shot of pulse.

Further, the water flow rate switch 66 changes the aimed water flow rate for control such that the flow rate of water discharged form the pump 36 is increased by a predetermined amount, for example 0.5 1/min on every pushing for the right side thereof, while the flow rate of the water discharged form the pump 36 is decreased by a predetermined amount, for example, 0.5 l/min on every one pushing for the right side thereof.

The heater control section 54 constitutes a thermostat type control circuit different from that of the water temperature and water flow rate control section 52 and, it is so adapted that the temperature of water in the hot water tank 16 is always maintained at a set temperature (for example, 60°C).

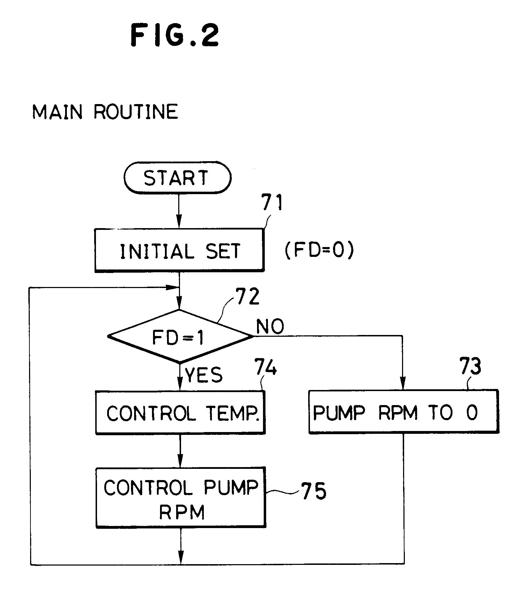

Then, explanation is to be made for the processing program stored in the ROM 56 while referring to Figure 2 through Figure 4. Figure 2 shows a main routine, which is starting by turning the power source for the controller 43 to ON. At first, the initial setting is made at the step 71 and flag FD = 0 is set. Then, it is judged as to FD = 0 or 1 at the step 72. Since FD = 0 at the initial set condition, the flow advances to the step 73, to set the rotation of the pump 36 to 0 and returns to the step 72. The processings in accordance with the steps 72 and 73 are repeatedly executed to maintain the state until the water stop switch 68 is manipulated.

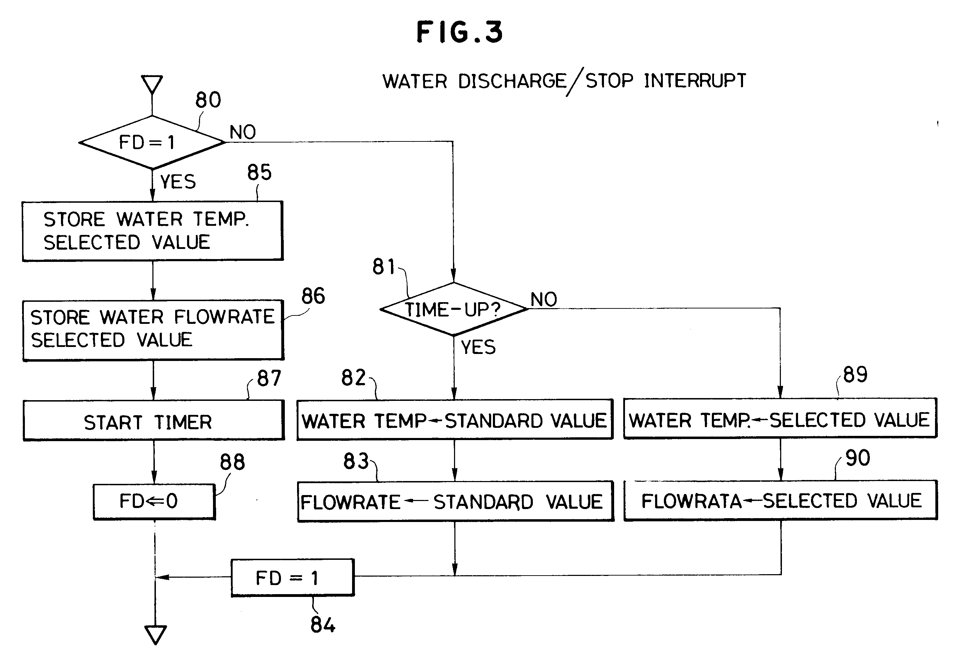

Then, when the water stop switch 68 is pushed for starting the discharge of water, an interrupt program as shown in Figure 3 is executed. That is, it is at first judged as to if FD = 0 or 1 at the step 80. Since this is the initial set state, FD = 0 and the flow advances to the step 81. Then, it is judged for the "time- up", that is, it is judged as to if "a predetermined of time" has been elapsed or not after the completion of the water discharging operation in the preceding cycle (water stop). The "predetermined of time" is set to, for example, between 3 - 10 minutes although it is only for the illustration. In this case, it is the initial set state and since the result of the judgement is YES, the flow advances to the step 82. Then, a standard value is inputted to the aimed water temperature for operation and a standard value is also inputted to the aimed water flow rate for operation (step 83). Then, FD = 1 is set at the step 84 and the flow returns to the main routine shown in Figure 2.

In the main routine, since FD = 1 is set when the step 72 is reached, the result of the judgement is YES, the temperature control operation is conducted at the step 74 and the flow rate control is conducted at the step 75 (control for the pump rotation) and returns again to the step 72. Then, the processings in accordance with the steps 72, 74 and 75 are repeatedly executed until the water stop switch 68 is pushed again for stopping the water. In the course of executing the repeating procedures, if the switch 64 or 66 is pushed to select the water temperature or flow rate, the aimed water temperature for control and the aimed flow rate for control are respectively changed to the selected values, and the temperature control and the pump rotation control are conducted at the step 74 and the step 75 so as to attain the selected values.

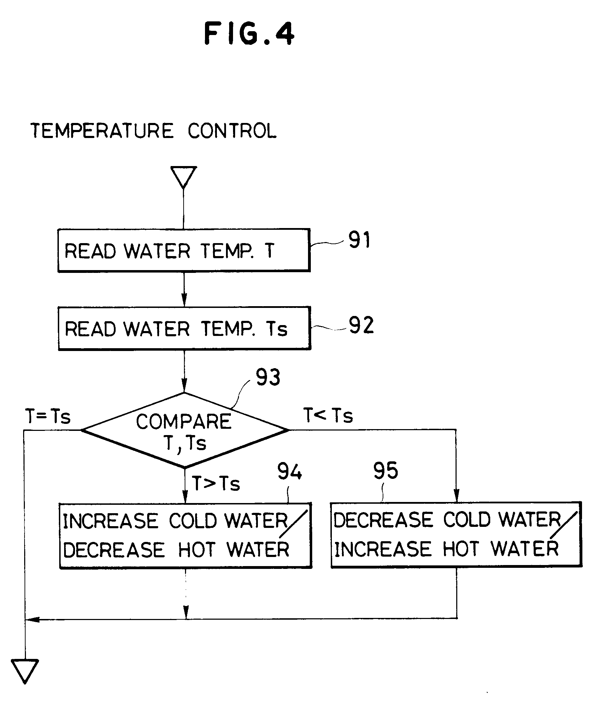

Figure 4 is a flow chart showing the program for the temperature control, which explains the content of the step 74 specifically. At first, an actual water temperature T for the mixed water detected by the temperature sensor 42 is read at the step 91. Then, the aimed water temperature Ts for control is read at the step 92 and the actual water temperature T and the aimed water temperature Ts are compared at the step 93. If both of the water temperatures coincide each other, the temperature control operation is not conducted and the flow advances to the step 75. In a case if there is a difference between the actual water temperature T and the aimed water temperature Ts, either the flow rate of cold water is increased and the flow rate or hot water is decreased to lower the temperature of the mixed water at the step 94, or the flow rate of cold water is decreased and the flow rate of hot water is increased to elevate the temperature of the mixed water at the step 95 and then the flow advances to the step 75.

Then, when the water stop switch 68 is pushed to conduct water stopping operation in a state where water discharge (FD = 1) is set, the interrupt program shown in Figure 3 is executed in the course of the processing of the main routine shown in Figure 2. That is, it is at first judged at the step 80 if FD = 1 or not. Since the water has been discharged so far in this case, FD = 1 and the flow advances to the step 85 and 86 to memorize the selected water temperature and the water flow rate at present. Then, the timer is started (step 87), FD = 0 is set (step 88) and then the flow returns to the main routine shown in Figure 2. In the main routine, since FD = 0 has been set, the flow advances from the step 72 to the step 73, where the rotation for the pump 36 is stopped, returns to the step 72 and continues the pump stop state by repeatingly executing the steps of 72 and 73.

In this water stop state, when the water stop switch 68 is pushed again. In this case, since FD = 0, the flow advances from the step 80 to the step 81, where it is judged as to if a predetermined of time has been elapsed or not from the start of the timer. If the predetermined of time has not yet been elapsed, that is, the result of the time-up judgement is NO, the flow advances to the step 89 and the step 90, where the selected values stored as the aimed water temperature and water flow rate for control are inputted and, after setting FD = 1 at the step 84, returns to the main routine. In the main routine, since FD = 1, steps 72, 74 and 75 are repeatedly executed to discharge water in accordance with the selected water temperature and the flow rate.

On the other hand, upon judging at the step 81, if the predetermined of time (for example, 5 min) has already been elapsed from the start of the timer, the result of the judgement for the time-up is YES and standard values are inputted respectively for the aimed water temperature and the flow rate (step 82, 83). Then, FD = 1 is set at the step 84 and the flow returns to the main routine. Accordingly, the water discharge is started again in this case with the water temperature and the flow rate both at the standard values.

As has been described above, according to the control program, the water temperature and the water flow rate upon re-starting the water discharge before the elapse of the predetermined of time after the water stopping operation are the same as the water temperature and the water flow rate upon stopping of water. Further, discharge of water is re-started at the standard water temperature and the standard water flow rate if it is started again after the elapse fo the predetermined of time from the water stopping operation.

Although the pump 36 is used as the means for controlling the flow rate of water discharged in the above-mentioned embodiment, a flow rate control valve may be disposed instead of the pump 36 in the present invention. In this case, it is necessary that a water supply pressure is applied to the cold water tank and the hot water tank respectively toward the mixing valve 30. Further, in the present invention, other cold water sources or hot water sources than the water tank or the hot water tank may be used. Furthermore, setting value changer may be disposed to the controller 43 for changing "standard water temperature", "standard water flow rate" or "predetermined of time" in the present invention.

The preferred embodiment of the present invention can provide a control apparatus for water temperature and water flow rate capable of starting the discharge of water, even after the temporal stopping of water, again at the water temperature and the water flow rate which has once been set to most preferable temperature and flow rate to a user again.

The preferred embodiment of the present invention can also provide a control apparatus for water temperature and water flow rate, capable of starting the discharge of water at a standard water temperature and a standard water flow rate in a case where a long period of time has been elapsed from the stopping for the discharge of water.

The preferred embodiment of the present invention can further provide an apparatus for controlling water temperature and water flow rate which can be manipulated simply.

## Claims

1. A control apparatus (43) for controlling water temperature and water flow rate comprising:
a mixing valve (30) adapted to be supplied with hot and cold water from a hot water source and cold water source respectively and deliver mixed water,
a flow rate control means (36) for controlling the flow-rate of the mixed water from said mixing valve (30) to a place where it is required, and
a controller (43) for operating said mixing valve (30) and said flow rate control means (36), wherein
said controller (43) comprises;
discharge control means (68) for starting and stopping the discharge of mixed water,
control means (64,66) for controlling the water flow rate and the water temperature of the mixed water,
a first memory means (RAM) for storing selected values (89,90) representing the water temperature and the water flow rate set by a user,
a timer for measuring time elapsed from stopping of a water discharge, and
characterised in that the control apparatus comprises a second memory means (RAM) for storing standard values (82,83) representing a standard water temperature and a standard water flow rate of the mixed water, and
a signal selection means coupled to the timer and to each of the first and second memory means and operable to output to the control means (64,66) either a selected value control signal, based on selected values, when a supply of water is requested before the elapse of a pre-determined period of time after the last water discharge operation has ceased or a standard value control signal, based on standard values, when a supply of water is requested after the elapse of a predetermined period of time after the last water discharge operation has ceased.

2. An apparatus as defined in claim 1, wherein the hot water source is a hot water tank (16) provided with an electrical heater (22).

3. An apparatus as defined in claim 1 or claim 2, wherein the cold water source is a tank (10) for storing tap water.

4. An apparatus as defined in any one of claims 1 to 3, wherein the flow rate control means (36) is a variable flow rate discharge pump.

5. An apparatus as defined in any foregoing claim, wherein the controller (43) is provided with a microcomputer (55) for storing a control program.

6. An apparatus as defined in any foregoing claim, wherein the mixing valve (30) is driven by a motor (32) such that the mixing ratio of hot water and cold water is changed.

7. A method of operating a control apparatus to control water temperature and water flow rate, the apparatus comprising:
a mixing valve (30) adapted to be supplied with hot and cold water from a hot water source and cold water source respectively and deliver mixed water,
a flow rate control means (36) for controlling the flow-rate of the mixed water from said mixing valve (30) to a place where it is required, and
a controller (43) for operating said mixing valve (30) and said flow rate control means (36), wherein
said controller (43) comprises;
discharge control means (68) for starting and stopping the discharge of mixed water, and
control means (64,66) for controlling the water flow rate and the water temperature of the mixed water, the method comprising:
measuring time elapsed from stopping of a water discharge to determine whether said elapsed time is less or greater than a predetermined time; and
outputting to the control means (64,66) either a selected value control signal, based on selected values (89,90), when a supply of water is requested before the elapse of said predetermined period of time after the last water discharge operation has ceased or a standard value control signal, based on standard values (82,83), when a supply of water is requested after the elapse of said predetermined period of time after the last water discharge operation has ceased, wherein said selected values represent the water temperature and water flow rate set by a user and said standard values represent a standard prestored water temperature and a standard prestored water flow rate.

## Patentansprüche

1. Regel-Einrichtung (4) für die Regelung der Wassertemperatur und der Wasserdurchflußrate mit folgenden Merkmalen: eine Steuereinrichtung zur Steuerung der Wassertemperatur und der Wasserdurchflußrate, mit folgenden Merkmalen: ein Mischventil (30), das dazu geeignet ist, mit heißem und kaltem Wasser von einer Heißwasserquelle und einer Kaltwasserquelle jeweils versorgt zu werden und um gemischtes Wasser abzugeben, eine Durchflußraten-Regeleinrichtung (36) zur Regelung der Durchflußrate des gemischten Wassers aus dem Mischventil (30) zu einer Stelle, wo es benötigt wird, und einen Regler (43) zur Verstellung des Mischventils (30) und der Durchflußraten-Regeleinrichtung (36), wobei der Regler folgende Merkmale aufweist: eine Abgabe-Regeleinrichtung (68) zum Starten und Beenden der Abgabe des gemischten Wassers, eine Regeleinrichtung (64, 66) zur Regelung der Wasserdurchflußrate und der Wassertemperatur des gemischten Wassers, eine erste Speichereinrichtung (RAM) zur Speicherung ausgewählter Werte (89, 90), die die Wassertemperatur und die Wasserdurchflußrate angeben, die durch einen Benutzer eingestellt werden, einen Zeitgeber zur Messung einer Zeitspanne vom Beenden einer Wasserentnahme an, dadurch gekennzeichnet, daß die Regeleinrichtung eine zweite Speichereinrichtung (RAM) zur Speicherung von Standardwerten (82, 83), die eine Standard-Wassertemperatur und eine Standard-Wasserdurchflußrate des gemischten Wasser darstellen, und eine Signalauswahleinrichtung aufweist, die mit dem Zeitgeber und sowohl mit der ersten als auch mit der zweiten Speichereinrichtung verbunden ist und die so betrieben werden kann, daß sie die Steuereinrichtung (64, 66) ansteuert, entweder mit einem ausgewählten Sollwert-Regelsignal, das auf ausgewählten Werten basiert, wenn eine Wasserentnahme vor dem Ablauf einer vorgegebenen Zeitspanne, nachdem die letzte Wasserentnahme vorgenommen wurde, beendet worden ist, oder mit einem Standard-Sollwert-Regelsignal, das auf Standardwerten basiert, wenn eine Wasserentnahme nach dem Ablauf einer vorgegebenen Zeitspanne, die nach der letzten Wasserentnahme beendet worden ist, gewünscht wird.

2. Einrichtung nach Anspruch 1, dadurch gekennzeichnet, daß die Heißwasserquelle ein Heißwassertank (16) ist, der mit einem elektrischen Heizelement (22) ausgestattet ist.

3. Einrichtung nach Anspruch 1 oder 2, dadurch gekennzeichnet, daß die Kaltwasserquelle ein Tank (10) ist, um Leitungswasser zu speichern.

4. Einrichtung nach einem der Ansprüche 1 bis 3, dadurch gekennzeichnet, daß die Durchflußraten-Regeleinrichtung (36) eine variable Durchflußraten-Abgabepumpe ist.

5. Einrichtung nach einem der vorhergehenden Ansprüche, dadurch gekennzeichnet, daß der Regler (43) mit einem Mikrocomputer (55) zur Speicherung eines Regelprogramms ausgestattet ist.

6. Einrichtung nach einem der vorhergehenden Ansprüche, dadurch gekennzeichnet, daß das Mischventil (30) durch einen Motor (32) so verstellt wird, daß das Mischverhältnis des Heißwassers und des Kaltwassers verändert wird.

7. Verfahren zum Betreiben einer Regeleinrichtung, um die Wassertemperatur und die Wasserdurchflußrate der Einrichtung zu regeln, das folgende Merkmal aufweist: ein Mischventil (30), das dazu geeignet ist, daß es mit heißem und kaltem Wasser von einer Heißwasserquelle und einer Kaltwasserquelle jeweils versorgt wird, und das gemischtes Wasser abgibt, eine Durchflußraten-Regeleinrichtung (36) zur Regelung der Durchflußrate des gemischten Wassers von dem Mischventil (30) zu einer Stelle, wo es benötigt wird, und einen Regler (43) zur Verstellung des Mischventils (30) und zur Ansteuerung der Durchflußraten-Regeleinrichtung (36), wobei der Regler (43) folgende Merkmale aufweist: eine Abgabe-Regeleinrichtung (68) zum Starten und Beenden der Abgabe von gemischten Wasser und Regeleinrichtungen (64, 66) zur Regelung der Wasserdurchflußrate und der Wassertemperatur des gemischten Wassers, wobei das Verfahren folgende Schritte umfaßt: Messung der abgelaufenen Zeit von dem Beenden der Wasserentnahme an, um zu bestimmen, ob die abgelaufene Zeit geringer oder größer als eine vorgegebene Zeit ist; und Abgabe zu den Regeleinrichtungen (64, 66) entweder ein ausgewähltes Sollwert-Regelsignal, das auf ausgewählten Werten (89, 90) beruht, falls eine Abgabe von Wasser gefordert wird, bevor die vorgegebene Zeitspanne nach der letzten Wasserentnahme abgelaufen ist, oder ein Standard-Sollwert-Regelsignal, das auf Standardwerten (82, 83) basiert, wenn eine Abgabe von Wasser nach dem Ablauf der vorgegebenen Zeitspanne nach der letzten Wasserentnahme beendet wurde, gewünscht wird, wobei die ausgewählten Werte die Wassertemperatur und die Wasserdurchflußrate darstellen, die durch einen Benutzer eingestellt wurden, und wobei die Standardwerte eine als Standardwert vorgegebene Wassertemperatur und eine als Standardwert vorgegebene Wasserdurchflußrate darstellen.

## Revendications

1. Dispositif de régulation (43) servant à contrôler la température et le débit de l'eau comprenant :
une vanne mélangeuse (30) pouvant recevoir de l'eau chaude et de l'eau froide provenant d'une source d'eau chaude et d'une source d'eau froide respectivement et délivrer de l'eau mélangée ;
un dispositif de régulation du débit (36) destiné à contrôler le débit de l'eau mélangée, provenant de ladite vanne mélangeuse (30), jusqu'à l'endroit où elle est utilisée ; et
un régulateur (43) permettant de faire fonctionner ladite vanne mélangeuse (30) et ledit dispositif de régulation du débit (36), dans lequel ledit régulateur (43) comprend :
un dispositif de régulation de sortie (68) destiné à initier et arrêter la sortie de l'eau mélangée ;
des dispositifs de régulation (64, 66) destinés à contrôler le débit et la température de l'eau mélangée ;
une première mémoire vive (RAM) destinée au stockage des valeurs choisies (89, 90) représentant la température et le débit de l'eau, établies par un utilisateur ;
une minuterie destinée à la mesure du temps écoulé depuis l'arrêt d'une sortie d'eau ; et
caractérisé en ce que le dispositif de régulation comprend une seconde mémoire vive (RAM) destinée au stockage des valeurs standards (82, 83) représentant une température standard et un débit standard de l'eau mélangée ; et
un dispositif de sélection de signal couplé à la minuterie et à chacune des première et seconde mémoires, pouvant envoyer au dispositif de régulation (64, 66) soit un signal de commande pour une valeur choisie, sur la base de valeurs choisies, lorsqu'une alimentation en eau est nécessaire avant la fin d'une durée déterminée au préalable après l'arrêt de la dernière opération de sortie de l'eau, soit un signal de commande pour une valeur standard, sur la base des valeurs standards, lorsqu'une alimentation en eau est nécessaire après la fin d'une durée déterminée au préalable après l'arrêt de la dernière opération de sortie d'eau.

2. Dispositif tel que défini dans la revendication 1, dans lequel la source d'eau chaude est un ballon d'eau chaude (16) équipé d'une résistance électrique (22).

3. Dispositif tel que défini dans la revendication 1 ou la revendication 2, dans lequel la source d'eau froide est un ballon (10) de stockage de l'eau courante.

4. Dispositif tel que défini dans l'une quelconque des revendications 1 à 3, dans lequel le dispositif de régulation du débit (36) est une pompe de sortie d'eau à débit variable.

5. Dispositif tel que défini dans l'une quelconque des revendications ci-dessus, dans lequel le régulateur (43) est équipé d'un micro-ordinateur (55) disposant d'un programme de régulation.

6. Dispositif tel que défini dans l'une quelconque des revendications ci-dessus, dans lequel la vanne mélangeuse (30) est animée par un moteur (32) permettant de modifier le rapport de mélange entre l'eau chaude et l'eau froide.

7. Méthode de fonctionnement d'un dispositif de régulation pour contrôler la température et le débit de l'eau, ce dispositif comprenant :
une vanne mélangeuse (30) pouvant recevoir de l'eau chaude et de l'eau froide provenant d'une source d'eau chaude et d'une source d'eau froide respectivement et délivrer de l'eau mélangée ;
un dispositif de régulation du débit (36) destiné à contrôler le débit de l'eau mélangée, provenant de ladite vanne mélangeuse (30), jusqu'à l'endroit où elle est utilisée ; et
un régulateur (43) permettant de faire fonctionner ladite vanne mélangeuse (30) et ledit dispositif de régulation du débit (36), dans lequel ledit régulateur (43) comprend :
un dispositif de régulation de sortie (68) destiné à initier et arrêter la sortie de l'eau mélangée ;
des dispositifs de régulation (64, 66) destinés à contrôler le débit et la température de l'eau mélangée, cette méthode comprenant :
la mesure du temps écoulé depuis l'arrêt d'une sortie d'eau pour déterminer si ledit temps écoulé est inférieur ou supérieur à une durée déterminée au préalable ; et
l'envoi aux dispositifs de régulation (64, 66) soit d'un signal de commande pour une valeur choisie, sur la base de valeurs choisies (89, 90), lorsqu'une alimentation en eau est nécessaire avant la fin d'une durée déterminée au préalable depuis l'arrêt de la dernière opération de sortie de l'eau, soit d'un signal de commande pour une valeur standard, sur la base de valeurs standards (82, 83), lorsqu'une alimentation en eau est nécessaire après la fin de ladite durée déterminée au préalable après l'arrêt de la dernière opération de sortie d'eau, où lesdites valeurs choisies représentent la température et le débit de l'eau établis par un utilisateur et lesdites valeurs standards représentent une température standard d'eau mémorisée au préalable et un débit standard d'eau mémorisé au préalable.
